# FASCICULE DE BREVET EUROPEEN

(11) **EP 3 630 403 B1**
(45) Date de publication et mention de la délivrance du brevet: **17.03.2021**
(21) Numéro de dépôt: 18723550.2
(22) Date de dépôt: 17.05.2018
(51) Int. Cl.: B23K 1/008, B23K 1/19, B23K 101/14, B23K 1/00

(54) **PROCÉDÉ DE BRASAGE OU RECHARGEMENT D'UNE PIÈCE À MICRO-INTERSTICES, ET ÉCHANGEUR THERMIQUE OBTENU PAR UN TEL PROCÉDÉ**
VERFAHREN ZUM LÖTEN ODER WIEDERBEFÜLLEN EINES TEILS MIT MIKROZWISCHENRÄUMEN UND MIT SOLCH EINEM VERFAHREN ERHALTENER WÄRMETAUSCHER
METHOD FOR BRAZING OR REFILLING A PART WITH MICRO-INTERSTICES, AND HEAT EXCHANGER OBTAINED WITH SUCH A METHOD

(30) Priorité: 01.06.2017 FR 1754864
(43) Date de publication de la demande: 08.04.2020
(73) Titulaire: Stiral, 38000 Grenoble (FR)
(72) Inventeur: MAZET, Thierry, 54000 Nancy (FR); BILLAT, Pierre, 38000 Grenoble (FR)
(74) Mandataire: Lavoix
(86) Numéro de dépôt international: PCT/EP2018/062864
(87) Numéro de publication internationale: WO 2018/219661

(56) Documents cités:
- FR-A1- 3 028 023
- JP-A- H0 679 446
- US-A1- 2001 032 715

## Description

La présente invention concerne un procédé de brasage ou de rechargement comprenant une étape d'application d'un revêtement sur une pièce comportant des interstices, un chauffage avec fusion au moins partielle du revêtement, et un refroidissement pour obtenir un résidu solidifié fixé sur la pièce.

L'invention concerne aussi un échangeur thermique ainsi obtenu, la pièce étant alors un élément définissant des canaux de circulation destinés à au moins deux fluides entre lesquels on souhaite réaliser un échange de chaleur.

Il est bien connu recourir au brasage pour assembler des pièces, en particulier en vue d'assembler un échangeur thermique ou une partie d'échangeur thermique.

Le rechargement permet un apport de matière, par exemple pour consolider ou étanchéifier une surface.

En outre, un type connu d'échangeur thermique met en œuvre une pièce constituée d'une feuille métallique repliée sur elle-même en accordéon. Deux tôles fixées de part et d'autre de la feuille métallique définissent des canaux de circulation localement parallèles à une direction longitudinale et situés de chaque côté de la feuille métallique. Les extrémités longitudinales des canaux débouchent sur des faces transversales de la feuille en accordéon dans lesquelles les canaux définissent des interstices.

Les canaux situés d'un côté de la feuille métallique sont parcourus par un fluide froid, tandis que ceux situés de l'autre côté sont parcourus par un fluide chaud. Ainsi, entre deux tôles circulent deux fluides, séparés l'un de l'autre par la feuille métallique et échangeant de la chaleur l'un avec l'autre au travers de la feuille métallique.

Les feuilles en accordéon, et les tôles recouvertes sur leurs deux faces d'un film de brasure sont alternativement empilées les unes sur les autres de façon à constituer un bloc appelé "matrice". Cet empilement est ensuite assemblé en une première étape dans un four de brasage. La matrice comprend généralement une première et dernière plaque d'une épaisseur plus importante que les tôles.

Pour étanchéifier la matrice sur son pourtour, des barres, appelées "barres de fermeture" sont généralement fixées sur la matrice. Des têtes d'alimentation en fluides sont ensuite ajoutées à la matrice pour constituer l'échangeur.

Du fait des différentiels de dilatation entre les pièces, qui empêchent de trop contraindre géométriquement les constituants du futur échangeur, il est généralement pratiqué plusieurs étapes de brasage, entre lesquelles des opérations d'usinage sont réalisées de façon à garantir les jeux entre pièces. Cette pratique nécessite une grande maîtrise des nuances d'alliages d'apport de façon à ne pas dégrader lors de l'étape suivante les jonctions réalisées à l'étape précédente

Une première méthode consiste à réaliser, dans un premier temps, un cadre fermé ou semi-ouvert dans lequel on va insérer une feuille en accordéon pour l'assembler par brasage une première fois. Dans un deuxième temps, on assemble par brasage un ensemble de ces cadres afin de constituer la matrice de l'échangeur. Dans un troisième temps, les tubes de connexion des fluides sont brasés sur la matrice.

Une seconde méthode consiste, dans un premier temps, à assembler par brasage l'ensemble des feuilles en accordéon sur l'ensemble des tôles, auxquelles sont jointes éventuellement les barres de fermeture orientées longitudinalement. Dans un deuxième temps, on usine les faces des feuilles en accordéon pour les aligner parfaitement, afin de les assembler par brasage avec les barres de fermetures orientées transversalement. On obtient ainsi la matrice de l'échangeur. Enfin, dans un troisième temps, les tubes de connexion des fluides sont brasés sur la matrice.

Par ailleurs, il existe un besoin, dans différents secteurs industriels, tels que l'automobile ou l'aéronautique, de réduire, d'une part, l'encombrement créé par les circuits thermiques et leur masse et, d'autre part, la quantité de fluides impliqués dans les échanges. En effet, ces fluides ont parfois une incidence sur l'environnement, qu'il convient de réduire au maximum.

Toutefois, plus les échangeurs sont de dimensions réduites, plus la deuxième étape s'avère difficile, c'est-à-dire le brasage des barres de fermeture sur la face des feuilles en accordéon présentant les interstices décrits plus haut.

Selon son abrégé, le document JP H06 79446 A, qui forme la base du préambule des revendications 1 et 11, décrit un procédé de brasage d'une plaque comportant des corrugations.

Un but de l'invention est donc de fournir un procédé de brasage ou de rechargement permettant de traiter des pièces telles que la pièce en accordéon précitée, présentant des micro-interstices en particulier pour réaliser des échangeurs de faibles dimensions.

A cet effet, l'invention concerne un procédé selon la revendication 1.

Selon des modes particuliers de réalisation, le procédé comprend l'une ou plusieurs des caractéristiques correspondant aux revendications 2 à 10, prise(s) isolément ou selon toutes les combinaisons techniquement possibles.

L'invention concerne aussi un échangeur thermique selon la revendication 11.

L'invention sera mieux comprise à la lecture de la description qui va suivre, donnée uniquement à titre d'exemple et faite en se référant aux dessins annexés, sur lesquels :
- la figure 1 est une vue en perspective d'un échangeur thermique selon l'invention,
- la figure 2 est une vue en perspective de la matrice de l'échangeur thermique représenté sur la figure 1, les collecteurs de fluide ayant été supprimés,
- la figure 3 est une vue de face, partielle, de la matrice de l'échangeur représentée sur les figures 1 et 2,
- la figure 4 est une vue en perspective d'un des étages de la matrice représentée sur la figure 3, et
- la figure 5 est une vue en perspective éclatée de l'étage représenté sur la figure 4, et d'un revêtement destiné à fermer latéralement cet étage.

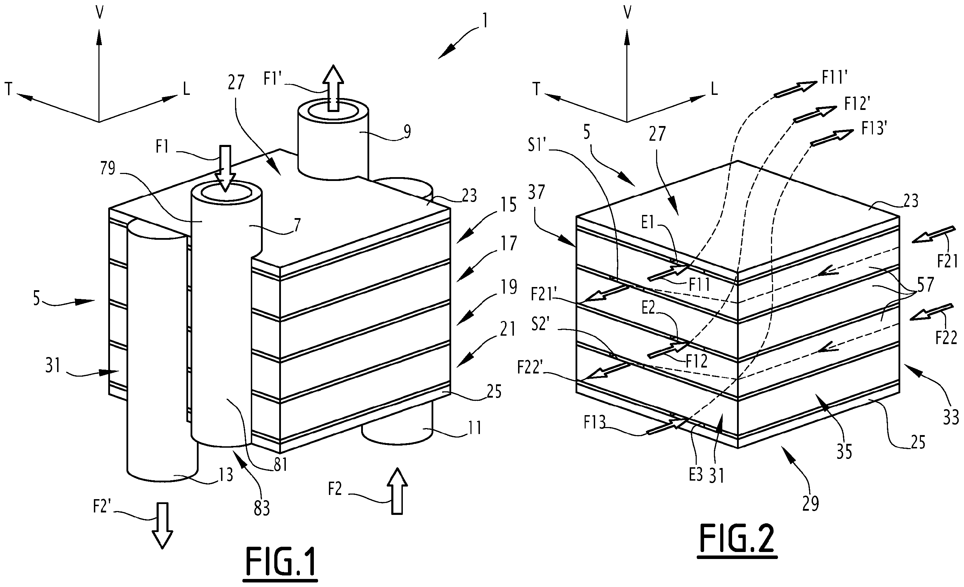

En référence aux figures 1 à 3, on décrit un échangeur 1 thermique selon l'invention.

Comme visible sur la figure 1, l'échangeur 1 comprend une matrice 5, et quatre organes 7, 9, 11, 13 pour respectivement apporter un fluide froid F1, récupérer un fluide réchauffé F1', amener un fluide chaud F2, et récupérer un fluide refroidi F2'.

Le fluide froid est par exemple de l'eau ou un mélange d'eau et de glycol.

Le fluide chaud est par exemple un liquide frigorigène de type HFE (hydrofluoroéther) ou HFO (hydrofluorooléfine), comme c'est le cas dans une pompe à chaleur. Dans le cas du refroidissement de l'huile d'un moteur thermique, le fluide chaud est l'huile à refroidir.

La matrice 5 comprend par exemple quatre étages 15, 17, 19, 21 superposés selon une direction V par exemple verticale, et deux plaques extrêmes 23, 25 formant respectivement une face supérieure 27 et une face inférieure 29 de la matrice.

La matrice 5 est par exemple de forme parallélépipédique. La matrice 5 comporte deux faces latérales 31, 33 (figure 2) opposées selon une direction longitudinale L sensiblement perpendiculaire à la direction V, et deux faces latérales 35, 37 opposées selon une direction transversale T sensiblement perpendiculaire à la direction V et à la direction longitudinale L.

Les faces latérales 31, 33, 35, 37 sont par exemple rectangulaires, et deux d'entre elles consécutives autour de la direction V forment avantageusement un angle sensiblement droit.

La face latérale 31 comporte par exemple trois entrées E1, E2, E3 pour trois flux F11, F12 et F13 issus du fluide froid F1, et deux sorties S1', S2' pour deux flux F21' et F22' destinés à former le fluide refroidi F2'.

La face latérale 33 comporte deux entrées (non visibles sur la figure 2 car situé à l'arrière) pour deux flux F21 et F22 issus du fluide chaud F2, et trois sorties (également non visibles sur la figure 2) pour trois flux F11', F12' et F13' destinés à former le fluide réchauffé F1'.

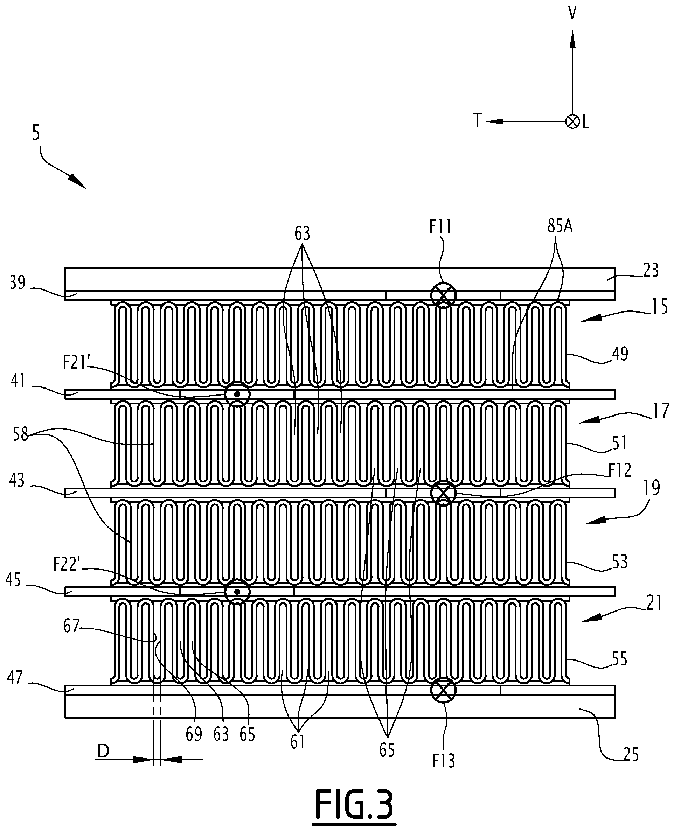

Comme visible sur les figures 2 et 3, les étages 15, 17, 19, 21 sont sensiblement analogues les uns aux autres.

Les entrées et les sorties précitées se présentent par exemple comme des fentes s'étendant transversalement sur les faces latérales 31, 33.

Les entrées E1, E2 et E3 sont par exemple alignées selon la direction V et situées en vis-à-vis de l'organe 7.

Il en va de même pour les entrées situées sur la face latérale 33, si ce n'est qu'elles sont situées en vis-à-vis de l'organe 11.

Les sorties S1' et S2' sont par exemple superposées selon la direction V et situées en vis-à-vis de l'organe 13. Il en va de même pour les sorties situées sur la face latérale 33, si ce n'est qu'elles sont situées en vis-à-vis de l'organe 9.

Les étages 15 à 21 sont formés par des tôles 39, 41, 43, 45, 47 sensiblement perpendiculaires à la direction V et alternant avec des pièces 49, 51, 53, 55. Les étages sont en outre fermés latéralement par des résidus solidifiés 57 s'étendant entre les tôles 39, 41, 43, 45, 47 selon la direction V.

Dans l'exemple représenté, les pièces 49, 51, 53, 55 sont analogues entre elles, aussi seule la pièce 51 appartenant à l'étage 17 sera décrite ci-après en référence aux figures 3 à 5.

La pièce 51 est en métal ou en alliage métallique, avantageusement en acier inoxydable 316L, et par exemple en 316L. La pièce 51 est formée par une feuille métallique 58 repliée sur elle-même en accordéon selon la direction longitudinale L. La pièce 51 définit une pluralité de canaux de circulation 63 situés au-dessus de la feuille métallique et destinés à recevoir le flux F21, et une pluralité de canaux de circulation 65 situés sous la feuille métallique et destinés à recevoir le flux F12.

La pièce 51 comporte deux faces 59, 60 longitudinalement opposées, dans lesquelles les canaux 63, 65 définissent des interstices 61.

Les interstices 61 comportent deux bords 67, 69 (figure 3) opposés transversalement et séparés par une distance maximale D inférieure ou égale à 250 µm, de préférence inférieure ou égale à 150 µm.

Les tôles 39, 41, 43, 45, 47 sont structurellement analogues les unes aux autres. Les tôles 39, 43, 47 présentent la même orientation dans l'espace, tandis que les tôles 41 et 45 présentent une autre orientation dans l'espace, se déduisant de la première par exemple par une rotation de 180° autour de la direction longitudinale L.

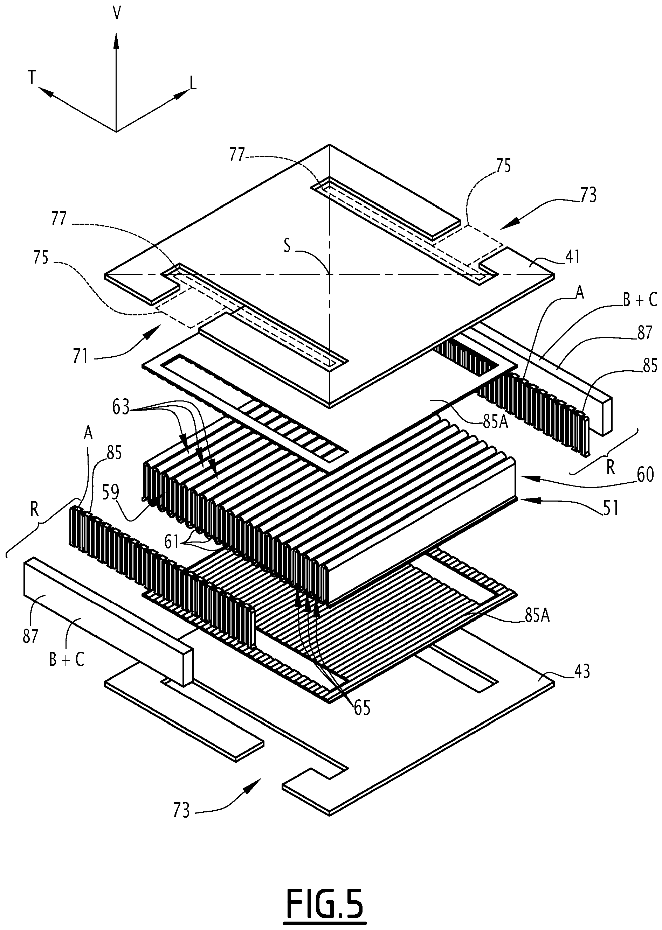

Chacune des tôles 39, 41, 43, 45, 47 présente par exemple une forme générale rectangulaire en vue selon la direction V. Chacune des tôles comprend deux découpes 71, 73 (figure 5) par exemple symétriques l'une de l'autre par rapport à un point S situé au centre de la tôle.

Chacune des découpes 71, 73 comprend une première partie 75 s'étendant longitudinalement à partir d'une des faces latérales 31 ou 33 de la matrice 5, et une deuxième partie 77 s'étendant transversalement au-dessus des canaux de circulation 63, ou en-dessous des canaux de circulation 65.

Selon des variantes non représentées, chacune des découpes 71, 73 comprend une première partie 75 s'étendant transversalement à partir d'une des faces latérales 35 ou 37 de la matrice 5, et une deuxième partie 77 s'étendant transversalement dans le prolongement de la première partie 75, au-dessus des canaux de circulation 63, ou en-dessous des canaux de circulation 65.

Les tôles 39, 41, 43, 45, 47 sont en métal ou en alliage métallique, par exemple en acier inoxydable, avantageusement en 316L. Les tôles sont fixées respectivement sur les pièces 49, 51, 53, 55, par exemple par un brasage classique.

Les organes 7, 9, 11, 13 sont avantageusement analogues les uns aux autres. Aussi, seul l'organe 7 sera décrit en détail ci-après.

L'organe 7 est en métal ou en alliage métallique, par exemple en acier inoxydable, avantageusement en 316L. L'organe 7 comprend une partie supérieure 79 tubulaire, et une partie inférieure 81 située dans le prolongement de la première partie selon la direction V et obtenue par découpe selon un plan correspondant à la face supérieure 27 et selon un plan correspondant à la face latérale 31. L'organe 7 comprend en outre un fond 83.

La fabrication de l'échangeur 1 va maintenant être décrite. Elle met en œuvre un procédé de brasage selon l'invention.

On fournit tout d'abord les pièces 49, 51, 53, 55, ainsi que les tôles 39, 41, 43, 45, 47 intercalaires, les plaques extrêmes 23, 25 et les organes 7, 9, 11, 13.

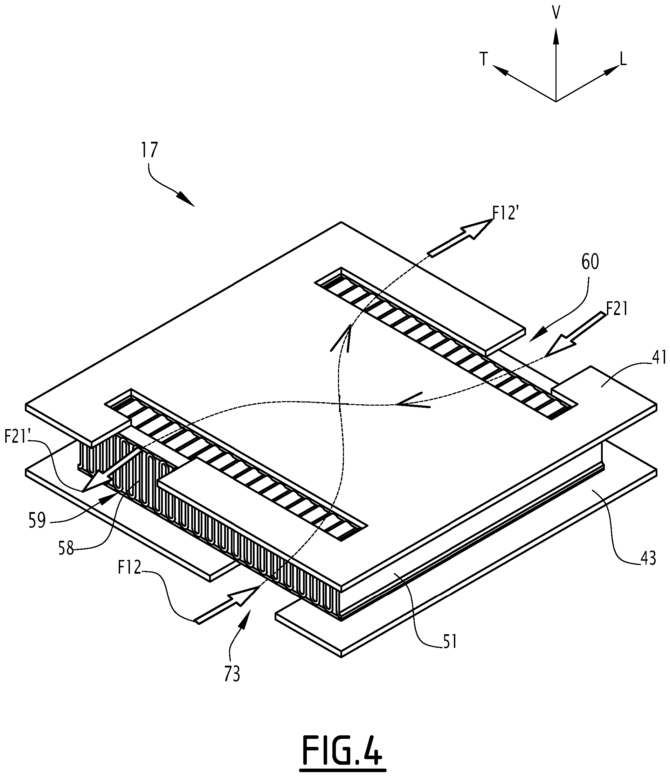

Ces éléments sont empilés comme représenté sur les figures 3 et 4 selon la direction V, en intercalant entre chacun des feuilles de brasage 85A comme représenté sur la figure 5.

Les feuilles de brasage 85A sont en alliage de brasure, par exemple en alliage BNi-2.

L'assemblage des pièces 49, 51, 53, 55, des tôles 39, 41, 43, 45, 47 et des plaques extrêmes 23 et 25 est réalisé par empilement, et maintenu mécaniquement grâce à un outillage adapté (non représenté).

Puis on réalise un revêtement R sur chaque face latérale des pièces 49, 51, 53, 55, respectivement entre les tôles 39, 41, 43, 45, 47 selon la direction V. Notamment, le revêtement R est en contact avec les faces 59, 60 comportant les interstices 61.

Enfin on chauffe l'assemblage et le revêtement R à une température de chauffage TF pour faire fondre au moins en partie le revêtement R.

Après refroidissement, le résidu solidifié 57 est obtenu.

Les organes 7, 9, 11, 13 sont ensuite fixés sur la matrice 5 par brasage, soudure, collage ou tout autre procédé adapté aux conditions d'utilisation futures de l'échangeur.

Selon un autre mode de réalisation plus économique, les organes 7, 9, 11, 13 sont placés sur l'ensemble constitué par l'assemblage et le revêtement R, avant que le nouvel ensemble ainsi constitué soit chauffé puis refroidi. Ceci permet d'obtenir un échangeur au terme d'un seul cycle de brasage.

Pour l'obtention du revêtement R, dans l'exemple représenté, une première couche 85 (figure 5) est appliquée sur chacune des pièces 49, 51, 53, 55, et une deuxième couche 87 est appliquée sur la première couche.

En variante, le revêtement R n'est présent que sur les faces latérales 31 et 33. En effet, les faces latérales 35 et 37 ne présentent pas, dans l'exemple décrit, de micro-interstices.

Selon un mode de réalisation particulier (non représenté) la deuxième couche 87 couvre au moins une partie des pièces 49 à 55 non recouverte par la première couche 85.

La deuxième couche 87 a par exemple une épaisseur allant de 1 à 10 fois l'épaisseur de la première couche 85.

Optionnellement, le revêtement R est compacté sous une pression de 0,1 à 6 bars, de préférence sous une pression d'environ 1 bar, par exemple par tirage au vide de l'ensemble constitué, après que l'ensemble a été placé dans une membrane souple et étanche à l'air (non représentée).

La première couche 85 est située au moins en partie dans les interstices 61, et est de préférence enchâssée dans la feuille métallique en accordéon. Dit autrement, la première couche 85 pénètre dans les interstices 61 selon la direction longitudinale L.

La première couche 85 comprend, avantageusement à au moins 90% en masse, une première poudre A constituée d'un métal ou d'un alliage de métaux et ayant une température de solidus TSA (température à laquelle apparaît la première goutte de liquide lorsqu'on chauffe la première poudre A) strictement supérieure à la température de chauffage TF. Dit autrement, la première poudre A est non fusible à la température de chauffage TF du procédé selon l'invention.

Si la première poudre A est un matériau pur, il va de soi que la température de solidus TSA est la température de fusion du matériau pur.

Avantageusement, la première poudre A comprend, à au moins 90% en masse, le même métal ou le même alliage de métaux que les pièces 49 à 55, c'est-à-dire de l'acier inoxydable 316L dans l'exemple.

La première poudre A possède des grains dont la taille est par exemple inférieure à 150 µm, préférablement inférieure à 44 µm.

Avantageusement, dans la première couche 85, la première poudre A est mélangée avec un liant organique, de préférence à base aqueuse, représentant entre 0,5% et 10%, avantageusement entre 0,5% et 4% en masse de la première couche 85.

La deuxième couche 87 comprend avantageusement, à au moins 90% en masse, un mélange d'une deuxième poudre B et d'une troisième poudre C. Avantageusement, la deuxième couche 87 comprend également un liant organique, préférablement à base aqueuse, représentant par exemple entre 0,5% et 10%, avantageusement entre 0,2% et 2% en masse de la deuxième couche 87.

La deuxième poudre B et la troisième poudre C sont respectivement des alliages distincts entre eux, chacun étant connu de l'homme du métier comme étant adapté pour braser ou recharger les matériaux dont sont faites les pièces 49 à 55. L'un et/ou l'autre de ces alliages est par exemple un alliage de base nickel.

La deuxième poudre B a une température de solidus TSB et une température de liquidus TLB (température à laquelle la deuxième poudre B devient entièrement liquide).

La troisième poudre C a une température de solidus TSC, et une température de liquidus TLC.

La température de solidus TSB est strictement supérieure à la température de solidus TSC. La température de chauffage TF est strictement supérieure à la température de solidus TSC, et inférieure, de préférence strictement, à la température de solidus TSB.

Ainsi, la troisième poudre C fond au moins partiellement pendant l'étape de chauffage, alors que la deuxième poudre B ne fond pas.

De manière préférée, la température de liquidus TLC est inférieure, de préférence strictement, à la température de solidus TSB. De plus, la température de chauffage TF est alors supérieure, de préférence strictement, à la température de liquidus TLC. Ainsi, on fait fondre de préférence la totalité de la troisième poudre C.

Dans le mélange, la deuxième poudre B représente une proportion en masse comprise entre 60 et 95%, de préférence entre 70 et 90%, et de manière encore plus préférée entre 75 et 85%.

Par exemple, la troisième poudre C comprend au moins 70% en masse de nickel. La poudre B est par exemple une poudre de rechargement à base de nickel (par exemple environ 85%), comportant environ 7,5% de chrome. La poudre C est par exemple une poudre de rechargement à base de nickel (par exemple environ 73%), comportant environ 15% de chrome.

Ainsi, la température de solidus TSB est par exemple de 1030°C. La température de liquidus TLB est par exemple de 1060°C.

La température de solidus TSC est par exemple de 980°C. La température de liquidus TLC est par exemple de 1020°C.

La température de solidus TSA est par exemple de 1370°C. La température à laquelle la première poudre A est totalement liquéfiée est par exemple de 1400°C.

La deuxième poudre B et la troisième poudre C ont par exemple une taille de grain inférieure à 212 µm, de préférence inférieure à 105 µm.

Selon des variantes non représentées, l'une et/ou l'autre de la première couche 85 et de la deuxième couche 87 sont dépourvues de liant. En effet, la présence de liant n'est pas utile dans certaines situations dans lesquelles le revêtement appliqué n'a pas besoin d'avoir une cohérence mécanique avant le brasage. Ceci est par exemple le cas lorsque le revêtement R est déposé sur une surface sensiblement horizontale.

Selon d'autres variantes, la deuxième couche 87 est déposée sur une surface support avant la première couche 85.

Le résidu solidifié 57 est présent dans les interstices 61 sur une profondeur comprise entre 0,1 et 3 mm, de préférence entre 0,2 mm et 1 mm, et de manière encore plus préférée entre 0,3 et 0,7 mm.

De manière préférée, la température de chauffage TF est supérieure ou égale à la température de liquidus TLC de la troisième poudre C, c'est-à-dire supérieure ou égale à 1020°C dans l'exemple décrit.

En pratique, on fait fondre au moins la moitié, en masse, de la troisième poudre C, et de préférence, comme expliqué ci-dessus, la totalité de la troisième poudre C.

Le fonctionnement de l'échangeur 1 se déduit de sa structure et va maintenant être brièvement décrit.

Le fluide froid F1 (figure 1) pénètre dans l'organe 7. Le fluide froid F1 s'écoule le long de la face latérale 31 de la matrice 5 et se divise en les flux F11, F12 et F13 (figure 2).

Les flux F11, F12 et F13 entrent dans la matrice 5 par les entrées E1, E2, E3.

Le flux F12 passe par la découpe 73 de la tôle 43 (figure 5). Le flux F12 s'écoule d'abord sensiblement longitudinalement par la première partie 75 de la découpe 73, puis s'écoule sensiblement transversalement dans la deuxième partie 77, il pénètre alors dans les canaux de circulation 65 de la pièce 51 et dans les canaux de circulation 63 de la pièce 53 (figure 3). A mesure qu'il s'écoule longitudinalement dans les canaux de distribution 63, 65, le fluide froid échange de la chaleur avec le fluide chaud F2 situé respectivement de l'autre côté de chacune des pièces 51, 53, et se refroidit. Le flux F12 sort de la matrice 5 par la face 33 au niveau de la découpe 71 de la tôle 43.

De même, les flux F11 et F13 s'écoulent au travers de la matrice 5 depuis la face latérale 31 jusqu'à la face latérale 33 en échangeant de la chaleur à contre-courant avec les flux F21 et F22.

Une fois réchauffés, les flux F11, F12, F13 deviennent des flux réchauffés F11', F12' et F13' qui débouchent dans l'organe 9 et se combinent pour former le fluide réchauffé F1'.

De même, le fluide chaud F2 pénètre dans l'organe 11 et se divise en les flux F21 et F22 qui entrent dans la matrice 5 par la face latérale 33.

Par exemple, comme visible sur la figure 4, le flux F21 pénètre par la découpe 73 de la tôle 41 et entre dans les canaux 63 définis par la pièce 51 et dans les canaux 65 de la pièce 49. Les flux F21 et F22 se refroidissent par échange thermique à travers les pièces 49, 51 d'une part et 53, 55 d'autre part et ressortent sous la forme de flux refroidis F21' et F22'. Les flux F21' et F22' se combinent dans l'organe 13 pour former le fluide refroidi F2'.

Ainsi, grâce aux caractéristiques décrites ci-dessus, le procédé de brasage permet de créer le résidu solidifié 57 formant une paroi latérale étanche sur les faces 59, 60 présentant les interstices 61, sans que des forces de capillarité ne provoquent une pénétration trop importante du revêtement R dans les interstices pendant le brasage.

En outre, le procédé permet la fabrication de l'échangeur 1 en minimisant le nombre d'étapes de brasage. Ceci permet d'obtenir des échangeurs de faibles dimensions, à coût réduit, et possiblement en une seule étape de brasage.

## Revendications

1. Procédé de brasage ou de rechargement comprenant les étapes suivantes :
- fourniture d'au moins une pièce (51) comprenant, à au moins 90% en masse, un métal ou un alliage de métaux, par exemple de l'acier inoxydable, la pièce (51) comportant au moins une face (59) définissant une pluralité d'interstices (61), les interstices (61) comportant au moins deux bords (67, 69) opposés séparés sur la face (59) par une distance maximale (D),
**caractérisé en ce que** la distance maximale (D) est inférieure ou égale à 250 micromètres, de préférence inférieure ou égale à 150 micromètres, et le procédé comprend en outre les étapes suivantes :
- obtention d'un revêtement (R) en contact avec ladite face (59), le revêtement (R) comprenant au moins une première couche (85) située au moins en partie dans les interstices (61), et une deuxième couche (87) adjacente à la première couche (85), la première couche (85) comportant une première poudre (A) comprenant, à au moins 90% en masse, un métal ou un alliage de métaux et ayant une température de solidus TSA, la deuxième couche (87) comprenant un mélange d'une deuxième poudre (B) et d'une troisième poudre (C), la deuxième poudre (B) et la troisième poudre (C) étant respectivement des alliages distincts entre eux et adaptés pour braser ou recharger la pièce (51), l'un et/ou l'autre de ces alliages étant par exemple un alliage de nickel, la deuxième poudre (B) ayant une température de solidus TSB, et la troisième poudre (C) ayant une température de solidus TSC strictement inférieure à la température de solidus TSB,
- chauffage de la pièce (51) et du revêtement (R) à une température de chauffage (TF), d'une part, strictement inférieure à la température de solidus TSA, et, d'autre part, inférieure, de préférence strictement, à la température de solidus TSB, et strictement supérieure à la température de solidus TSC, et fusion au moins partielle du revêtement (R), et
- refroidissement de la pièce (51) et du revêtement (R) au moins partiellement fondu, et obtention d'un résidu solidifié (57) fixé sur la pièce (51).

2. Procédé selon la revendication 1, dans lequel la première poudre (A) comprend, à au moins 90% en masse, le même métal ou le même alliage de métaux que la pièce (51).

3. Procédé selon la revendication 1 ou 2, dans lequel la deuxième poudre (B) représente, dans ledit mélange, une proportion en masse comprise entre 60% et 95%, de préférence entre 70% et 90%, et de manière encore plus préférée entre 75% et 85%, ladite proportion en masse s'entendant avant mélange.

4. Procédé selon l'une quelconque des revendications 1 à 3, dans lequel la troisième poudre (C) comprend au moins 70% en masse de nickel.

5. Procédé selon l'une quelconque des revendications 1 à 4, dans lequel le résidu solidifié (57) se prolonge dans lesdits interstices (61) sur une profondeur comprise entre 0,1 mm et 3 mm, de préférence entre 0,2 mm et 1 mm, et de manière encore plus préférée entre 0,3 et 0,7 mm.

6. Procédé selon l'une quelconque des revendications 1 à 5, dans lequel :
- la première poudre (A) a une taille de grain inférieure à 150 micromètres, préférablement inférieure à 44 micromètres,
- la deuxième poudre (B) et la troisième poudre (C) ont une taille de grain inférieure à 212 micromètres, préférablement inférieure à 105 micromètres.

7. Procédé selon l'une quelconque des revendications 1 à 6, dans lequel, à l'étape d'obtention :
- la première couche (85) et la deuxième couche (87) comprennent respectivement un liant organique, préférentiellement à base aqueuse, les liants représentant respectivement entre 0,5% et 4% en masse de la première couche (85), et entre 0,2% et 2% en masse de la deuxième couche (87).
- la première couche (85) est appliquée sur la pièce (51) et la deuxième couche (87) est appliquée sur la première couche (85), la deuxième couche (87) couvrant optionnellement au moins partie de la pièce (51) non recouverte par la première couche (85), et
- optionnellement le revêtement (R) est compacté sous une pression de 0,1 à 6 bars, de préférence sous une pression d'environ 1 bar.

8. Procédé selon l'une quelconque des revendications 1 à 7, dans lequel la pièce (51) est configurée pour former au moins une partie d'un échangeur thermique (1), la pièce (51) comportant de préférence au moins une feuille métallique (58) pliée en accordéon, la feuille métallique (58) définissant une pluralité de canaux de circulation (63, 65) pour au moins deux fluides (F1, F2) destinés à circuler de chaque côté de la feuille métallique, chaque canal de circulation (63, 65) comportant une extrémité définissant l'un des interstices (61) de ladite face (59).

9. Procédé selon l'une quelconque des revendications 1 à 8, dans lequel le résidu solidifié (57) obture totalement lesdits interstices (61).

10. Procédé selon l'une quelconque des revendications 1 à 9, dans lequel, la troisième poudre (C) ayant une température de liquidus TLC, la température de chauffage (TF) est supérieure ou égale à la température de liquidus TLC.

11. Echangeur thermique (1) comprenant :
- au moins une pièce (51) en acier inoxydable, la pièce comportant au moins une face (59) définissant une pluralité d'interstices (61), les interstices (61) comportant au moins deux bords (67, 69) opposés séparés par une distance maximale (D), la pièce (51) comportant de préférence au moins une feuille métallique (58) pliée en accordéon, la feuille métallique (58) définissant une pluralité de canaux de circulation (63, 65) pour au moins deux fluides (F1, F2) destinés à circuler de chaque côté de la feuille métallique (58), chaque canal de circulation (63, 65) comportant une extrémité définissant l'un des interstices (61) de ladite face (59), et **caractérisé en ce que** :
- la distance maximale (D) est inférieure ou égale à 250 micromètres, de préférence inférieure ou égale à 150 micromètres, et par
- au moins un résidu solidifié (57) fixé sur la pièce (51), le résidu solidifié (57) étant susceptible d'être obtenu par le procédé suivant :
- obtention d'un revêtement (R) en contact avec ladite face (59), le revêtement (R) comprenant au moins une première couche (85) située au moins en partie dans les interstices (61), et une deuxième couche (87) adjacente à la première couche (85), la première couche (85) comportant une première poudre (A) comprenant, à au moins 90% en masse, un métal ou un alliage de métaux et ayant une température de solidus TSA, la deuxième couche (87) comprenant un mélange d'une deuxième poudre (B) et d'une troisième poudre (C), la deuxième poudre (B) et la troisième poudre (C) étant respectivement des alliages distincts entre eux et adaptés pour braser ou recharger la pièce (51), l'un et/ou l'autre de ces alliages étant par exemple un alliage de nickel, la deuxième poudre (B) ayant une température de solidus TSB, et la troisième poudre (C) ayant une température de solidus TSC strictement inférieure à la température de solidus TSB,
- chauffage de la pièce (51) et du revêtement (R) à une température de chauffage (TF), d'une part, strictement inférieure à la température de solidus TSA, et, d'autre part, inférieure, de préférence strictement, à la température de solidus TSB, et strictement supérieure à la température de solidus TSC, et fusion au moins partielle du revêtement (R), et
- refroidissement de la pièce (51) et du revêtement (R) au moins partiellement fondu.

## Patentansprüche

1. Verfahren zum Löten oder zum Auftragsschweißen, aufweisend die folgenden Schritte:
- Bereitstellen wenigstens eines Bauteils (51), welches aufweist wenigstens 90 Massen-% eines Metalls oder einer Metalllegierung, z.B. rostfreien Stahls, wobei das Bauteil (51) wenigstens eine Seite (59) aufweist, die eine Mehrzahl von Zwischenräumen (61) definiert, wobei die Zwischenräume (61) wenigstens zwei gegenüberliegende Ränder (67, 69) aufweisen, die auf der Seite (59) um einen Maximalabstand (D) getrennt sind,
**dadurch gekennzeichnet, dass** der Maximalabstand (D) kleiner oder gleich 250 Mikrometer, bevorzugt kleiner oder gleich 150 Mikrometer, ist, wobei das Verfahren ferner die folgenden Schritte aufweist:
- Erlangen einer Beschichtung (R) in Kontakt mit der besagten Seite (59), wobei die Beschichtung (R) aufweist wenigstens eine erste Schicht (85), die wenigstens teilweise in den Zwischenräumen (61) angeordnet ist, und eine zweite Schicht (87) benachbart zu der ersten Schicht (85), wobei die erste Schicht (85) ein erstes Pulver (A) aufweist, das wenigstens 90 Massen-% eines Metalls oder einer Metalllegierung aufweist und eine Verfestigungstemperatur TSA hat, wobei die zweite Schicht (87) eine Mischung aus einem zweiten Pulver (B) und einem dritten Pulver (C) aufweist, wobei das zweite Pulver (B) und das dritte Pulver (C) jeweils voneinander verschiedene Legierungen sind und angepasst sind, um das Bauteil (51) zu löten oder zu auftragsschweißen, wobei die eine und/oder die andere dieser Legierungen zum Beispiel eine Nickellegierung ist, wobei das zweite Pulver (B) eine Verfestigungstemperatur TSB hat und wobei das dritte Pulver (C) eine Verfestigungstemperatur TSC hat, die strikt kleiner als die Verfestigungstemperatur TSB ist,
- Erwärmen des Bauteils (51) und der Beschichtung (R) auf eine Erwärmungs-Temperatur (TF), die einerseits strikt kleiner als die Verfestigungstemperatur TSA ist und die andererseits kleiner, bevorzugt strikt kleiner, als die Verfestigungstemperatur TSB ist und strikt größer als die Verfestigungstemperatur TSC ist, und wenigstens teilweises Schmelzen der Beschichtung (R), und
- Abkühlen des Bauteils (51) und der wenigstens teilweise geschmolzenen Beschichtung (R), und Erlangen eines verfestigten Rests (57), der an dem Bauteil (51) fixiert ist.

2. Verfahren gemäß Anspruch 1, wobei das erste Pulver (A) aufweist wenigstens 90 Massen-% des gleichen Metalls oder der gleichen Metalllegierung wie das Bauteil (51).

3. Verfahren gemäß Anspruch 1 oder 2, wobei das zweite Pulver (B) in der besagten Mischung einen Massenanteil liegend zwischen 60% und 95%, bevorzugt zwischen 70% und 90% und noch bevorzugter zwischen 75% und 85%, hat, wobei der besagte Massenanteil vor der Vermischung vorliegt.

4. Verfahren gemäß irgendeinem der Ansprüche 1 bis 3, wobei das dritte Pulver (C) wenigstens 70 Massen-% Nickel aufweist.

5. Verfahren gemäß irgendeinem der Ansprüche 1 bis 4, wobei der verfestigte Rest (57) sich in die Zwischenräume (61) erstreckt über eine Tiefe, die zwischen 0,1 mm und 3 mm, bevorzugt zwischen 0,2 mm und 1 mm und noch bevorzugter zwischen 0,3 und 0,7 mm liegt.

6. Verfahren gemäß irgendeinem der Ansprüche 1 bis 5, wobei:
- das erste Pulver (A) eine Korngröße kleiner als 150 Mikrometer, bevorzugt kleiner als 44 Mikrometer hat,
- wobei das zweite Pulver (B) und das dritte Pulver (C) eine Korngröße kleiner als 212 Mikrometer, bevorzugt kleiner als 105 Mikrometer hat.

7. Verfahren gemäß irgendeinem der Ansprüche 1 bis 6, wobei im Erlangen-Schritt:
- die erste Schicht (85) und die zweite Schicht (87) jeweils aufweisen einen organischen Binder, bevorzugt auf wässriger Basis, wobei die Binder jeweils zwischen 0,5 Massen-% und 4 Massen-% der ersten Schicht (85) und zwischen 0,2 Massen-% und 2 Massen-% der zweiten Schicht (87) repräsentieren.
- die erste Schicht (85) auf das Bauteil (51) aufgetragen wird und die zweite Schicht (87) auf die erste Schicht (85) aufgetragen wird, wobei die zweite Schicht (87) optional wenigstens teilweise das nicht von der ersten Schicht (85) bedeckte Bauteil (51) bedeckt, und
- wobei optional die Beschichtung (R) unter einem Druck von 0,1 bis 6 Bar, bevorzugt unter einem Druck von ungefähr 1 Bar, verdichtet wird.

8. Verfahren gemäß irgendeinem der Ansprüche 1 bis 7, wobei das Bauteil (51) konfiguriert ist zum Bilden wenigstens eines Teils eines Wärmetauschers (1), wobei das Bauteil (51) bevorzugt ein Metallblech (58) aufweist, das Ziehharmonika-gefaltet ist, wobei das Metallblech (58) eine Mehrzahl von Strömungskanälen (63, 65) für wenigstens zwei Fluide (F1, F2) aufweist, die dazu bestimmt sind, auf jeder Seite des Metallblechs zu strömen, wobei jeder Strömungskanal (63, 65) ein Ende aufweist, das einen der Zwischenräume (61) der besagten Seite (59) aufweist.

9. Verfahren gemäß irgendeinem der Ansprüche 1 bis 8, wobei der verfestigte Rest (57) die Zwischenräume (61) komplett verschließt.

10. Verfahren gemäß irgendeinem der Ansprüche 1 bis 9, wobei das dritte Pulver (C) eine Verflüssigungstemperatur TLC hat, wobei die Erwärmungstemperatur (TF) größer oder gleich der Verflüssigungstemperatur TLC ist.

11. Wärmetauscher (1), aufweisend:
- wenigstens ein Bauteil (51) aus rostfreiem Stahl, wobei das Bauteil wenigstens eine Seite (59) aufweist, die eine Mehrzahl von Zwischenräumen (61) definiert, wobei die Zwischenräume (61) wenigstens zwei gegenüberliegende Ränder (67, 69) aufweisen, die um einen Maximalabstand (D) getrennt sind, wobei das Bauteil (51) bevorzugt wenigstens ein Metallblech (58) aufweist, das Ziehharmonika-gefaltet ist, wobei das Metallblech (58) eine Mehrzahl von Strömungskanälen (63, 65) für wenigstens zwei Fluide (F1, F2) definiert, die dazu bestimmt sind, auf jeder Seite des Metallblechs (58) zu strömen, wobei jeder Strömungskanal (63, 65) ein Ende aufweist, das einen der Zwischenräume (61) der besagten Seite (59) definiert, **dadurch gekennzeichnet, dass**:
- der Maximalabstand (D) kleiner oder gleich 250 Mikrometer, bevorzugt kleiner oder gleich 150 Mikrometer, ist und durch
- wenigstens einen verfestigen Rest (57), der an dem Bauteil (51) fixiert ist, wobei der verfestigte Rest (57) imstande ist, durch das folgende Verfahren erlangt zu werden:
- Erlangen einer Beschichtung (R) in Kontakt mit der besagten Seite (59), wobei die Beschichtung (R) aufweist wenigstens eine erste Schicht (85), die wenigstens teilweise in den Zwischenräumen (61) angeordnet ist, und eine zweite Schicht (87) benachbart zu der ersten Schicht (85), wobei die erste Schicht (85) ein erstes Pulver (A) aufweist, das wenigstens 90 Massen-% eines Metalls oder einer Metalllegierung aufweist und eine Verfestigungstemperatur TSA hat, wobei die zweite Schicht (87) eine Mischung aus einem zweiten Pulver (B) und einem dritten Pulver (C) aufweist, wobei das zweite Pulver (B) und das dritte Pulver (C) jeweils voneinander verschiedene Legierungen sind und angepasst sind, um das Bauteil (51) zu löten oder zu auftragsschweißen, wobei die eine und/oder die andere dieser Legierungen zum Beispiel eine Nickellegierung ist, wobei das zweite Pulver (B) eine Verfestigungstemperatur TSB hat und wobei das dritte Pulver (C) eine Verfestigungstemperatur TSC hat, die strikt kleiner als die Verfestigungstemperatur TSB ist,
- Erwärmen des Bauteils (51) und der Beschichtung (R) auf eine Erwärmungs-Temperatur (TF), die einerseits strikt kleiner als die Verfestigungstemperatur TSA ist und die andererseits kleiner, bevorzugt strikt kleiner, als die Verfestigungstemperatur TSB ist und strikt größer als die Verfestigungstemperatur TSC ist, und wenigstens teilweises Schmelzen der Beschichtung (R), und
- Abkühlen des Bauteils (51) und der wenigstens teilweise geschmolzenen Beschichtung (R).

## Claims

1. A brazing or refilling method, comprising the following steps:
- providing at least one part (51) containing at least 90% by mass of a metal or metal alloy, for example stainless steel, the part (51) having at least one face (59) defining a plurality of interstices (61), the interstices (61) comprising at least two opposite edges (67, 69) separated on the face (59) by a maximum distance (D),
**characterised in that** the maximum distance (D) is less than or equal to 250 micrometers, preferably less than or equal to 150 micrometers, and the process further comprises the following steps:
- obtaining a coating (R) in contact with said face (59), the coating (R) comprising at least a first layer (85) located at least partially in the interstices (61), and a second layer (87) adjacent to the first layer (85), the first layer (85) comprising a first powder (A) comprising at least 90% by mass of a metal or metal alloy and having a solidus temperature TSA, the second layer (87) comprising a mixture of a second powder (B) and a third powder (C), the second powder (B) and the third powder (C) being, respectively, different alloys suitable for brazing or refilling the part (51), one and/or the other of these alloys being for example a nickel alloy, the second powder (B) having a solidus temperature TSB, and the third powder (C) having a solidus temperature TSC strictly lower than the solidus temperature TSB,
- heating the part (51) and the coating (R) at a heating temperature (TF) strictly lower than the solidus temperature TSA, on the one hand, and lower, preferably strictly lower, than the solidus temperature TSB, and strictly higher than the solidus temperature TSC, and at least partially melting the coating (R), and
- cooling the part (51) and the at least partially molten coating (R), and obtaining a solidified residue (57) attached to the part (51).

2. The method according to claim 1, wherein the first powder (A) comprises at least 90% by mass of the same metal or the same metal alloy as the part (51).

3. The method according to claim 1 or 2, wherein the second powder (B) represents, in said mixture, a proportion by mass of between 60% and 95%, preferably between 70% and 90%, and still more preferably between 75% and 85%, said proportion by mass being before mixing.

4. The method according to any one of claims 1 to 3, wherein the third powder (C) comprises at least 70% by mass of nickel.

5. The method according to any one of claims 1 to 4, wherein the solidified residue (57) extends in said interstices (61) over a depth of between 0.1 mm and 3 mm, preferably between 0.2 mm and 1 mm, and still more preferably between 0.3 and 0.7 mm.

6. The method according to any one of claims 1 to 5, wherein:
- the first powder (A) has a grain size smaller than 150 micrometers, preferably smaller than 44 micrometers,
- the second powder (B) and the third powder (C) have a grain size smaller than 212 micrometers, preferably smaller than 105 micrometers.

7. The method according to any one of claims 1 to 6, wherein, in the obtainment step:
- the first layer (85) and the second layer (87) respectively comprise an organic binder, preferably with an aqueous phase, the binders respectively representing between 0.5% and 4% by mass of the first layer (85), and between 0.2% and 2% by mass of the second layer (87),
- the first layer (85) is applied on the part (51) and the second layer (87) is applied on the first layer (85), the second layer (87) optionally at least partially covering the part (51) not covered by the first layer (85), and
- optionally the coating (R) is compacted under a pressure from 0.1 to 6 bars, preferably under a pressure of about 1 bar.

8. The method according to any one of claims 1 to 7, wherein the part (51) is configured to form at least one part of a heat exchanger (1), the part (51) preferably including at least one metallic sheet (58) folded as an accordion, the metallic sheet (58) defining a plurality of circulation channels (63, 65) for at least two fluids (F1, F2) suitable for circulating on each side of the metallic sheet, each circulation channel (63, 65) including an end defining one of the interstices (61) of said face (59).

9. The method according to any one of claims 1 to 8, wherein the solidified residue (57) completely closes off said interstices (61).

10. The method according to any one of claims 1 to 9, wherein, the third powder (C) having a liquidus temperature TLC, the heating temperature (TF) is greater than or equal to the liquidus temperature TLC.

11. A heat exchanger (1) comprising:
- at least one part (51) made from stainless steel, the part including at least one face (59) defining a plurality of interstices (61), the interstices (61) including at least two opposite edges (67, 69) separated by a maximum distance (D), the part (51) preferably including at least one metallic sheet (58) folded as an accordion, the metallic sheet (58) defining a plurality of circulation channels (63, 65) for at least two fluids (F1, F2) intended to circulate on each side of the metallic sheet (58), each circulation channel (63, 65) including an end defining one of the interstices (61) of said face (59), and **characterized in that** the maximum distance (D) is less than or equal to 250 µm, preferably less than or equal to 150 µm, and by at least one solidified residue (57) attached on the part (51), the solidified residue (57) being able to be obtained by the following method:
- obtaining a coating (R) in contact with said face (59), the coating (R) comprising at least a first layer (85) located at least partially in the interstices (61), and a second layer (87) adjacent to the first layer (85), the first layer (85) comprising a first powder (A) comprising at least 90% by mass of a metal or metal alloy and having a solidus temperature TSA, the second layer (87) comprising a mixture of a second powder (B) and a third powder (C), the second powder (B) and the third powder (C) being, respectively, different alloys suitable for brazing or refilling the part (51), one and/or the other of these alloys being for example a nickel alloy, the second powder (B) having a solidus temperature TSB, and the third powder (C) having a solidus temperature TSC strictly lower than the solidus temperature TSB,
- heating the part (51) and the coating (R) at a heating temperature (TF) strictly lower than the solidus temperature TSA, on the one hand, and lower, preferably strictly lower, than the solidus temperature TSB, and strictly higher than the solidus temperature TSC, and at least partially melting the coating (R), and
- cooling the part (51) and the at least partially molten coating (R).
